**Europäisches Patentamt**

**European Patent Office**

**Office européen des brevets**

(11) Publication number: **0 254 460**
**A1**

# (12) EUROPEAN PATENT APPLICATION

(21) Application number: **87306136.0**

(22) Date of filing: **10.07.87**

(51) Int. Cl.4: **A46B 13/02** , A46B 7/10

(30) Priority: **16.07.86 PH 34019**

(43) Date of publication of application:
**27.01.88 Bulletin 88/04**

(84) Designated Contracting States:
**AT BE CH DE ES FR GB GR IT LI LU NL SE**

(71) Applicant: **Misa, Joaquin L., Sr.**
**11 Anahaw Street Valle Verde IV**
**Pasig Metro Manile(PH)**

(72) Inventor: **Misa, Joaquin L., Sr.**
**11 Anahaw Street Valle Verde IV**
**Pasig Metro Manile(PH)**

(74) Representative: **Smith, Philip Antony et al**
**REDDIE & GROSE 16 Theobalds Road**
**London WC1X 8PL(GB)**

(54) **Motor-powered rotary toothbrush.**

(57) Brush 20 is carried by stem 16 and rotated about the axis of the stem by the shaft 13 of a motor M which is reversible by operation of switch S. The stem 16 is detachably coupled to the shaft 13 by a radial tongue on the shaft engaging a slot in the stem and by bosses 14 engaging recesses 19. An arcuate shield 21 is rotatably mounted on the stem 16 to cover part of the brush circumference. The shield 21 is held stationary by contact with the mouth or tongue while the brush rotates.

FIG. 2

EP 0 254 460 A1

## MOTOR-POWERED ROTARY TOOTHBRUSH

It is now well recognised that the most effective and beneficial manner of brushing the teeth while simultaneously massaging the gum is to move the brush from the gums outward to the teeth. This movement, however, is awkward and difficult to repeat in the number of times required to accomplish the required brushing and massaging.

In accordance with the present invention there is provided a motor-powered rotary toothbrush comprising a hollow handle containing a reversible motor, the shaft of the motor projecting from one end of the handle, and a brush head with a stem which is detachably coupled to the motor shaft and bristles projecting from the stem to form a generally cylindrical brush rotatable about the cylinder axis by the motor, an arcuate shield being rotatably mounted on the stem to cover part of the circumferential surface of the bristles while allowing rotation of the brush.

In the device to be described in this specification a motor-powered rotating brush head with bristles in rows along its length and around its axis performs the dual function of brushing the teeth and massaging the gums with ease.

The brush head is mounted on an electric motor capable of reversing the rotation on activation by a double acting switch. The reversible feature of the rotation allows the brush to move from the gums outward to the teeth as the brush is moved between upper and lower teeth and inner and outer surfaces of the teeth.

To guard against the brush working against and irritating the tongue, inner surface of the cheeks and lips there is provided a curved shield or covering which covers almost half of the brush. The cover, which is loosely secured to the stem of the brush head, swivels and follows loosely the rotation of the brush. The rotation of the cover can be stopped with the slightest pressure as when it comes in contact with the gums, inner side of the lips and cheeks and tongue where it is held in place while that area is being brushed and massaged.

Thus a motor powered rotary toothbrush and gum massager with detachable brush head is provided which effectively brushes the teeth and at the same time massages the gums with great ease.

The device effectively reaches the innermost portion of the teeth where a conventional toothbrush cannot.

The detachable brush head makes it possible for the whole family to have their own brush heads but share the same motor power.

Other objects and advantages of the present invention will appear more fully after reading the following description taken with reference to the accompanying drawings, wherein the several reference numerals designate the same parts throughout, and in which:

Figure 1 is a perspective view of a motor powered rotary toothbrush and gum massager with detachable brush head in accordance with the invention;

Figure 2 is a cross-sectional view taken along line 2-2 of Figure 1, clearly illustrating the engagement of the brush head to the motor's shaft with the opposed bosses on said shaft lockably secured to the corresponding opposed recesses on the inner side of the hollow end of said stem;

Figure 3 is a cross-sectional view taken along line 3-3 of Figure 1, showing the key on the motor's shaft lockably engaged to the slot on the hollow end of the brush head's stem; and

Figure 4 is another cross-sectional view taken along line 4-4 of Figure 3, showing the entire locking means of the device.

Referring now to the drawings in detail, there is shown a motor powered rotary toothbrush and gum massager with detachable head brush which is generally designated by reference numeral 10, comprising basically a hollow handle 11 and a detachable brush head 12.

The hollow handle 11 is provided inside thereof with a reversible motor M with the motor's shaft 13 protruding outwardly at one end thereof. Said motor M is connected in series by electric wire W, the end of which is connected to a male plug P, to a double acting switch S, fixedly secured outside the handle 11 which activates the rotation or reverse rotation of the motor which in turn rotates or reversely rotates the brush head 12. Said motor's shaft 13 has a pair of opposed bosses 14 and a key 15 integrally secured thereon.

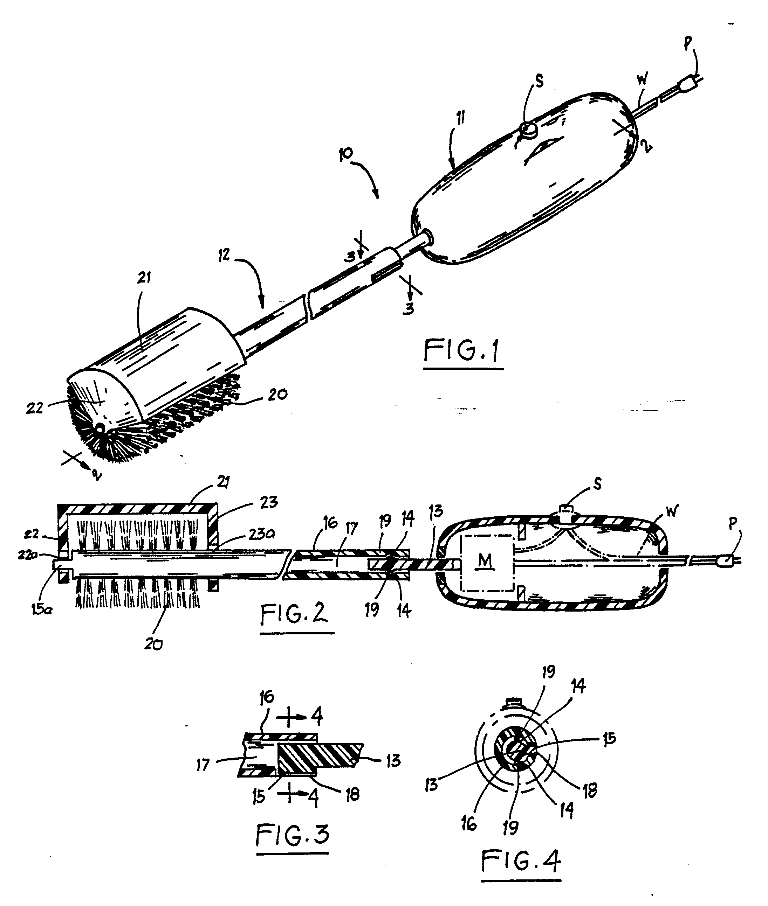

Said detachable brush head 12 has a stem 16 having an inner hollow end 17 which is provided with a slot 18 and opposed recesses 19 disposed at the inner surface thereof. Said slot 18 is lockably engaged with the key 15 on the motor's shaft 13 adapted to rotationally secure the stem 16 to the shaft 15, and said opposed recesses 19 are lockably engaged with the opposed bosses 14 to axially secure the stem 16 to the shaft 15 in order to prevent the stem 16 from being detached while in use, as clearly illustrated in Figure 4. Radially secured proximate the outer end of the stem 16 are the rows of bristles 20 covering the entire circumferential surface thereof. Said bristles 20 are arranged so as to alternate a row with slightly longer and softer bristles, intended for massaging the gums, and a row of bristles consisting of firmer and slightly shorter bristles, intended for brushing and polishing the teeth. Rotatively secured on the stem 16 and covering almost half of the bristles 20 is the shield 21 having opposed arms 22 and 23 provided with holes 22a and 23a at the ends thereof. The arm 22 is loosely secured to the pin 15a, at the outer end of the stem 16, through hole 22a and the arm 23 is loosely secured to the stem 16 through hole 23a. A slight pressure on the shield 21 by the tongue, the inner side of the lips or cheeks will stop the shield 21 from rotating with the stem 16 thereby shielding the same from being irritated.

## Claims

1. A motor-powered rotary toothbrush comprising a hollow handle containing a reversible motor, the shaft of the motor projecting from one end of the handle, and a brush head with a stem which is detachably coupled to the motor shaft and bristles projecting from the stem to form a generally cylindrical brush rotatable about the cylinder axis by the motor, an arcuate shield being rotatably mounted on the stem to cover part of the circumferential surface of the bristles while allowing rotation of the brush.

2. A motor powered rotary brush and gum massager with detachable head brush comprising:
a hollow handle having a reversible motor secured inside with the motor's shaft protruding outwardly at one end thereof, said motor being connected in series to a double acting switch by electric wire having a male plug at the end thereof, said motor's shaft being provided with a key and opposed bosses; and
a detachable head brush having a stem, said stem having a hollow inner end provided with a slot which is lockably engaged to the key on said motor's shaft, and opposed recesses disposed at the inner side thereof which lockably engages with the opposed bosses on the motor's shaft, rows of bristles radially secured proximate the outer end of said stem covering entirely the circumferential surface thereof, and a shield, covering almost half of the bristles, and loosely secured to said stem, having opposed arms provided with holes at the ends thereof, one arm being loosely secured to the stem through said hole, and the other arm being loosely secured to the pin on the outer end of the stem through said hole.

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 551 959 (HANIA) <br> * Page 1, lines 14-21; figure * | 1 | A 46 B 13/02 <br> A 46 B 7/10 |
| Y | | 2 | |
| | --- | | |
| Y | FR-A-2 421 578 (LVOFF) <br> * Page 5, lines 19-30; figure 3 * | 2 | |
| | --- | | |
| A | US-A-3 739 416 (KURACHI) <br> * Column 4, lines 6-27; figures 1,4 * | 1,2 | |
| | ----- | | |

TECHNICAL FIELDS SEARCHED (Int. Cl.4)

A 46 B

The present search report has been drawn up for all claims

| Place of search <br> THE HAGUE | Date of completion of the search <br> 09-10-1987 | Examiner <br> WOHLRAPP R.G. |
|---|---|---|